# EUROPEAN PATENT APPLICATION

(11) **EP 1 339 000 A2**
(43) Date of publication of application: **27.08.2003**
(21) Application number: 03002620.7
(22) Date of filing: 10.02.2003
(51) Int. Cl.: G06F 17/60

(54) **Method and system for managing the exchange of documents related to the life cycle of an order between a customer and a supplier**

(30) Priority: 13.02.2002 IT MO20020028
(71) Applicant: Democenter - Centro Servizi Per L'innovazione Societa' Consortile a Responsabilita' Limitata, 41100 Modena (IT); Smarten S.r.l., 41100 Modena (IT)
(72) Inventor: Tinti, Andrea, 41100 Modena (IT); Garuti, Massimo, 41100 Modena (IT)
(74) Representative: Modiano, Guido, Dr.-Ing.

(57) **Abstract**

A system for exchanging documents related to the life cycle of an order in electronic form over one or more data communications networks, particularly the Internet, comprising a proprietary information system (10) for generating and managing orders and further comprising elements for defining a workflow and rules in any electronic format, elements (20) for converting the order, the workflow and the rules into a message in a predefined standard electronic format that can be interpreted by one or more standard applications, particularly e-mail clients (40), and elements for sending the message from a first station to at least one other station by means of standard communications protocols, the stations being reached by data communications networks.

## Description

The present invention relates to a method and system for managing the exchange of documents related to a generic order, for example the order to purchase a product or service or a work order, and to all the possible steps of its life cycle, such as the order proposal, the offer request, the confirmation of the order, the request to amend the order, the progress of activities scheduled by the order, the issuing of the transport document related to the ordered items, the nonconformity reports, the invoices and payments, between customers/clients and the supplier.

In recent years there has been a considerable growth of communication media, both in technological terms and in terms of the diffusion of data communications networks, particularly the Internet. This growth has initiated a transformation of the management of many activities traditionally performed manually, introducing the possibility to increase efficiency considerably and at the same time reduce business management costs by way of the automation of many steps of the work cycle.

Technological growth, moreover, affects all fields and induces businesses to outsource their activities increasingly, both to guarantee the benefits of production areas that have a lower labor cost and to benefit from higher efficiency of scale or skill that specific suppliers can ensure, retaining in-house only the activities that are strategic for their own skill area, focusing their efforts on what is known as their "core business" and delegating to third parties the management of secondary activities, leading to high collaboration and interaction among different businesses.

These collaborations are typically hierarchical, of the client-subsuppliers or customer-suppliers type, often structured into various levels, such as client-supply chain. In some cases they can also be of the peer-to-peer type, for example following an agreement among entrepreneurs to market certain components together with the aim of offering added value to the end customer.

As a result of the operating conditions described above, the concepts of data-processing integration among businesses are becoming increasingly important both for small and medium enterprises, which require close collaborations in order to be competitive with respect to large enterprises, and for large enterprises, which require efficient methods and tools for managing in the best possible manner their supply chains, which are changing and evolving constantly.

Integration among businesses, in particular, is linked to the problems of improving organization performance, in which attention is focused on communication of information and on coordination and optimization of business processes and decisions, so as to achieve higher levels of productivity, flexibility and quality.

Accordingly, various specific requirements of electronic and automated management, particularly for management of orders and of their life cycle, have arisen.

The attempts and products provided in order to deal with the issue offer solutions that are typically of the "company-centric" type, to be applied to specific businesses rather than to business communities and to supply chains in general.

Developers of management applications have generally conceived functions for communicating with suppliers or with the supply chain by means of a module of the management program, such as for example *J.D. Edwards Advanced Planning, Baan e-procurement, Claurus e-procurement, Oracle Internet Procurement* and *Diapason Networked Enterprise,* or the *SCM (Supply Chain Management)* modules of *Baan IV, SAP, PeopleSoft* and various other commercially known companies.

However, the fact of considering these functions within a module of the management program of a business assumes heavy integration with the management programs, to be achieved by means of tables that compose the company database.

Likewise, developers of department programs, i.e., of programs for managing the advancement of production, schedulers, and so forth, have conceived these functions as an extension of the management of the progress of in-house activities, as is the case for example for *FMOS2000*, made by *TXT e-Solutions.*

While on the one hand this allows better integration with the information of the management or department program used by the client, on the other hand it causes high costs for implementation and for full rollout and introduces severe problems in the suppliers, who are forced to work with different tools depending on the information system of the various customers and/or clients.

An alternative approach is found in EDI communications protocols, which were introduced initially in banks and then exported also to large industrial holdings, consolidated by means of various sector-specific standards: for example, *Odette* in the automotive sector, *Editex* in the textile sector, *ECR* in the trade sector.

These communications protocols require the use of a specific module to support EDI communications and require point-to-point dedicated lines. In practice, due to the high costs of implementation and use, they are justified only within large groups and in particular only among large businesses characterized by a high volume of information exchange.

The proliferation of communications standards and documents has led to the introduction, in most cases, of service providers capable of converting the formats and documents exchanged among partners that have different standards.

The evolution of EDI orientated to suppliers characterized by limited exchanges of information, known as WebEDI, provides for the presence of a service provider that makes available, via an Internet site, the documents received from the client. Via the same site it is generally possible to generate additional documents to be sent to the client, for example the order confirmation, the delivery note, and so forth. Although this solution reduces the technological and economic constraints of the original EDI solutions, it clearly has the same disadvantages as the software modules cited above, i.e., the need to work with different tools according to the "service provider" chosen by the client.

Further evolutions of the WebEDI approach have provided for document exchange, status management and any negotiations by using external repositories, generally accessible via the Web, which contain all the flow models used and all the active documents. An example of this solution is the *Manem* application of the *Joinet* company.

With respect to standard WebEDI solutions, these applications ensure a much more sophisticated workflow management that is more specific in terms of document type.

However, these solutions, which are substantially simple imports/exports of predefined files, although being less difficult to integrate with the various management systems of the partners, do not solve the need to work with different systems depending on the application used by the client.

Moreover, these solutions have the often unwanted characteristic of having to place the documents at a service provider that is a third party with respect to the businesses involved in the communication.

Finally, so-called "marketplaces" and sector-specific portals have become widespread. These environments focus on the transaction rather than on the aspects of communication and synchronization of events. In marketplaces and in sector-specific portals, moreover, generally there is a strong competition among the suppliers that are present.

It is therefore evident that the current background art as yet does not provide an optimum solution for the exchange of information in the context of managing an order and its life cycle.

The aim of the present invention is to provide a new method and system for managing the exchange of documents related to the life cycle of an order between customer and supplier that overcomes the above-mentioned problems.

Within this aim, an object of the present invention is to allow easy integration among the various management systems in order to ensure communication and exchange of data both with critical suppliers and with occasional suppliers.

Another object of the present invention is to give the supplier the possibility to interact with the various customers by using a single tool, regardless of the client and the application used by said client.

Another object of the present invention is to provide a system that requires no intermediaries for the correct execution of communication, limiting the use of nonproprietary technology to existing communications infrastructures that constitute a standard that is recognized by the businesses involved.

This aim and these and others objects that will become better apparent hereinafter are achieved by a system for the exchange of documents related to the life cycle of an order in electronic form over one or more data communications networks, comprising a proprietary information system for generating and managing orders, characterized in that it comprises: means for defining a workflow and rules in any electronic format, including proprietary ones; means for converting the order, the workflow and the rules into a message in a predefined standard electronic format, which can be interpreted by one or more standard applications; and means for sending the message from a first station to at least one other station by way of standard communications protocols, the two stations being reached by at least one data communications network.

This aim and these and other objects that will become better apparent hereinafter are also achieved by a method for the exchange of documents related to the life cycle of an order in electronic form over one or more data communications networks, characterized in that it comprises the steps of: generating an order in any proprietary electronic format; defining a workflow and rules in any proprietary or standard electronic format; converting the order, the workflow and the rules into a message in a predefined standard electronic format that can be interpreted by one or more standard applications; sending the message from a first station to at least one other station by means of standard communications protocols, said stations being reached by at least one data communications network.

Further characteristics and advantages of the invention will become better apparent from the following detailed description, given by way of non-limitative example and accompanied by the corresponding figures, wherein:
Figure 1 is a first schematic view of the system according to the invention;
Figure 2 is a second schematic view of the system according to the invention;
Figure 3 is a block diagram, illustrating in greater detail an adapter module according to the present invention;
Figure 4 is a diagram that exemplifies the data flow related to an implementation of the inventive concept on which the present invention is based;
Figures 5 and 6 exemplify a possible implementation of messages exchanged between the parties of the described system for implementing the inventive concept on which the present invention is based, showing the order as displayed on screen in comparison with the listing that generates said screen display, given in Tables 2 and 3;
Figure 7 is a status chart that illustrates graphically an example of workflow;
Figure 8 illustrates the significant tables of an exemplifying implementation of the "*Documents*" and "*Workflow*" databases.

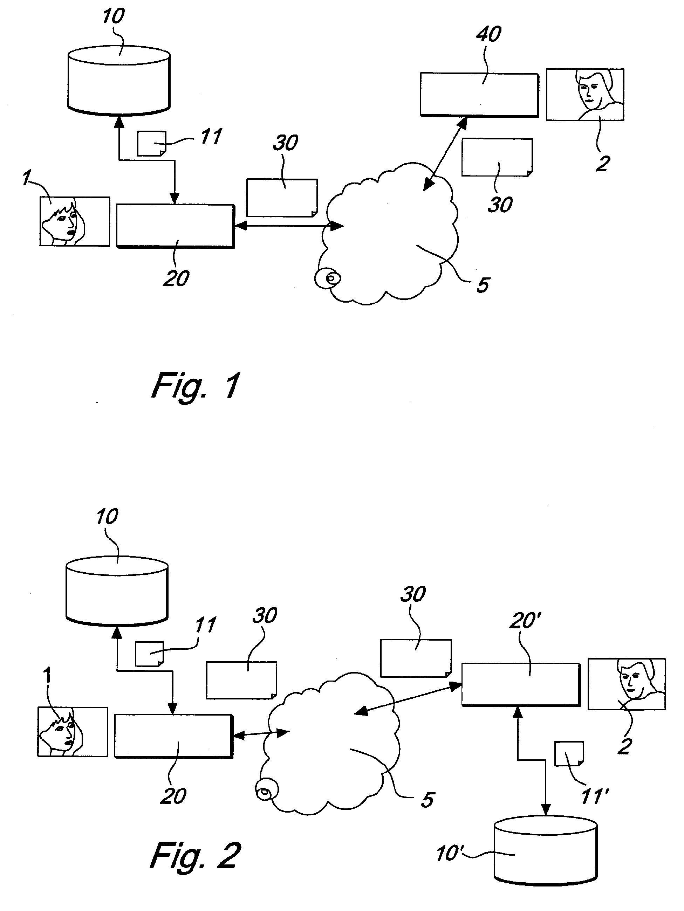

Figure 1 illustrates a first embodiment of the architecture of the system according to the invention.

In particular, Figure 1 schematically illustrates an information system 10 of a client 1, an adapter module 20, an e-mail 30, a conventional e-mail client 40, which can also be a conventional e-mail program chosen among one of the commercially available ones, for example Microsoft Outlook™, Netscape Messenger™, Qualcomm Eudora™, or Lotus Notes™, of a recipient 2 of the e-mail 30, and a data communications network 5, preferably the Internet.

The elements shown schematically in Figure 1 are illustrated by way of example and represent what are actually a plurality of stations of clients or customers and a plurality of stations of recipients.

Within a supply chain there are in fact more or less complex collaboration relationships which, for the sake of clarity in illustration, can be simplified substantially to one-to-one relationships of the customer-supplier type, wherein the term "customer" references the party that requests a product or service and the term "supplier" references the party that supplies that product or service.

Having said this, the system is first described with reference to Figure 2, which illustrates a second embodiment of the architecture of the system according to the invention in which the illustrated elements are the same ones already described with reference to Figure 1 as regards the customer side, while on the supplier side one can notice the additional presence of an information system 10' and of an adapter module 20'.

The adapter module 20 is an application that is capable of converting a document 11 to be exchanged between customer and supplier, for example a purchase order, into a message that is compatible with any suitable standard or proprietary method of communication that can be used over the data communications network 5 and contains the information on the intended flow.

The customer can work simultaneously and equally with a first plurality of suppliers according to the first exemplified embodiment and with a second plurality of suppliers according to the second exemplified embodiment, without having to know which suppliers operate according to one of the exemplified embodiments or the other.

Merely by way of non-limitative illustration, the invention is described here with reference to the Internet in its role as a data communications network 5 and to the use of e-mail on electronic computers as regards the data transmission method.

The person skilled in the art will of course appreciate that the same inventive concept can be applied equally to many data communications networks and by using alternative communications systems, for example networks for GPRS and UMTS cellular telephones and e-mail programs for cellular telephones or handheld computers, browsers and any other tool that allows to manage this information.

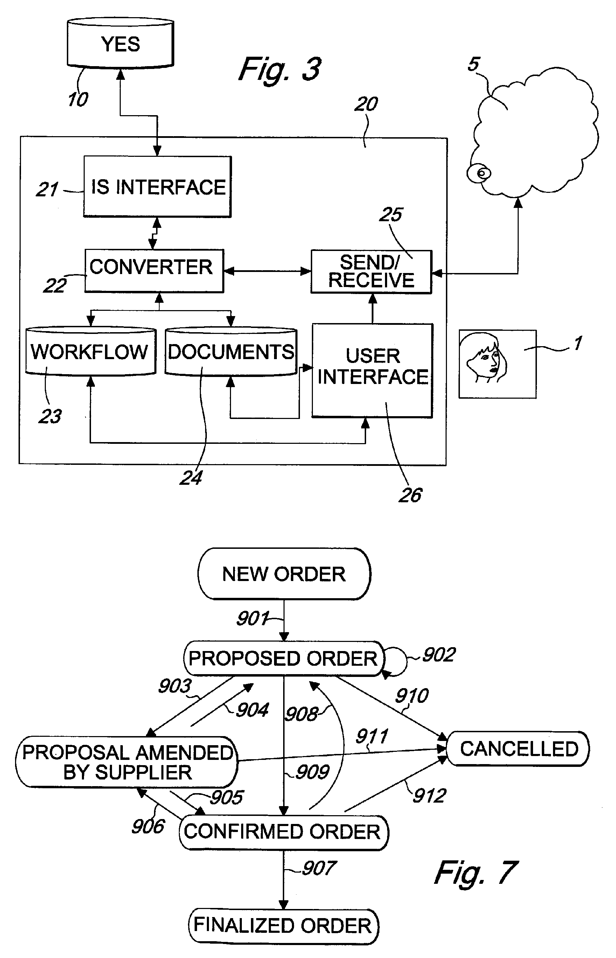

Figure 3 is a more detailed view of the structure of the adapter module 20. The adapter module includes an interface 21 toward the information system 10, a data converter 22, a database 23 called "*Workflow*", a database 24 called "*Documents*", a send and receive module 25, and a user interface 26.

In greater detail, the interface 21 is a module capable of extracting or receiving from the information system 10 documents 11 to be transmitted to the suppliers 2 and of updating or sending to the information system 10 the documents 11' received from the suppliers 2 according to the communications protocol and the data layout of the information system, both defined by the client 1.

The data converter 22, also referenced as "*e-mail converter*", substantially performs two functions.

The first function is constituted by the conversion of the document 11, which is extracted or received from the information system 10, into a message 30, an e-mail in the case illustrated here, and by the inclusion in the message 30, after an optional format conversion, of additional data defined in the "*Workflow*" database.

The second function is constituted by the conversion of the documents 11' sent by the suppliers 2 from a standard format to a proprietary format and their insertion and transmission to the information system 10.

The "*Workflow*" 23 is a database that contains the information on the flow expected for every type of document 11 and every type of supplier 2, as well as the information related to the layout of the message 30, as described in greater detail hereinafter.

The "*Documents*" database 24 contains all the active documents classified according to suitable strategies: for example, documents 11 to be sent, sent documents 11, and documents 11' received from the suppliers 2 and information regarding their status.

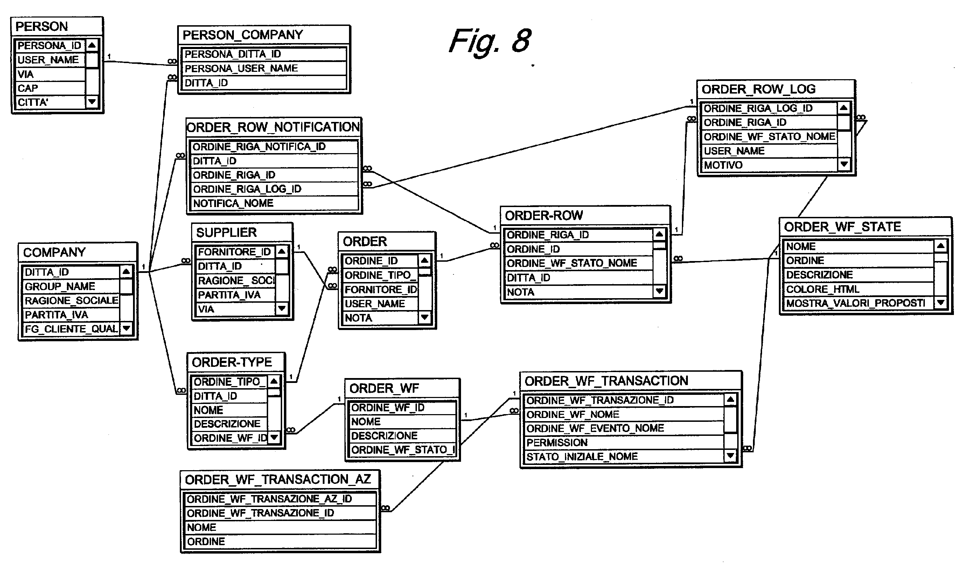

The significant tables of an exemplifying implementation of the databases 23 and 24 are given in Figure 8.

The three tables "PERSON", "COMPANY" and "SUPPLIER" store data concerning the actors involved in the order taking. The "PERSON_COMPANY" table links a person to a company. The three tables "ORDER", "ORDER-TYPE" and "ORDER-ROW" hold data concerning the type of an order, the order header and each row in the order respectively, and link the actors involved in the process to an order, as is shown in the conventional diagram of Figure 8. The "ORDER_WF_STATE" table provides support as concern the state of an order and how this order shall be displayed on the computer screen. The "ORDER_ROW_NOTIFICATION" table stores notifications for each order row, Log data is stored in the "ORDER_ROW_LOG" table.

Finally, the "ORDER_WF", "ORDER_WF_TRANSACTION" and "ORDER_WF_TRANSACTION_AZ" tables store data concerning the transactions involved in the order taking. Of course, the diagram shown in Figure 8 is just an illustrative example of a database and it is trivial for the person skilled in the art to define a different database for the same purpose.

The send and receive module 25 is a software application that has the task of managing the sending and receiving of e-mails to suppliers according to the chosen protocol and to known communications techniques.

In particular, in the preferred embodiment described here, the messages are e-mails in the Mime Multipart format, which includes an HTML (HyperText Markup Language) or XML (eXtended Markup Language) portion that represents the documents and the information related to the life cycle of the orders. The information contained in said portion can therefore be read directly by the user and can also be interpreted unequivocally by an automatic processing system.

Preferably, the protocols used for sending and receiving are respectively the SMTP (Simple Mail Transfer Protocol) and POP/IMAP (Post Office Protocol/Internet Message Access Protocol) standard protocols, particularly POP3/IMAP4.

Moreover, the message 30 can be enhanced with additional information that is attached automatically or manually, such as documents in various formats, for example files of the Adobe Acrobat™ type, such as attached technical documentation, confirmation copy of the order included in the body of the message, or others.

Finally, the user interface 26 identifies the application used to display, organize and send the documents from and to the suppliers 2.

The user interface 26 provides mainly means for controlling the sending of a message and for displaying the content of the *Documents* database 24, but also provides means for customizing the status chart that defines the flow of the documents: for example, the possibility to have an "amendment request" status that allows the supplier to request an amendment to the delivery date of a received purchase order, or the possibility to regulate the interaction between different document flows, for example the possibility to send a transport document only if the purchase orders related to the products provided in the transport document have a given status, for example the "confirmed" status.

The message 30, which is therefore for example an e-mail, is the actual document that is exchanged between the customer 1 and the supplier 2 and therefore allows to transfer both the data related to the order and the information regarding the planned workflow.

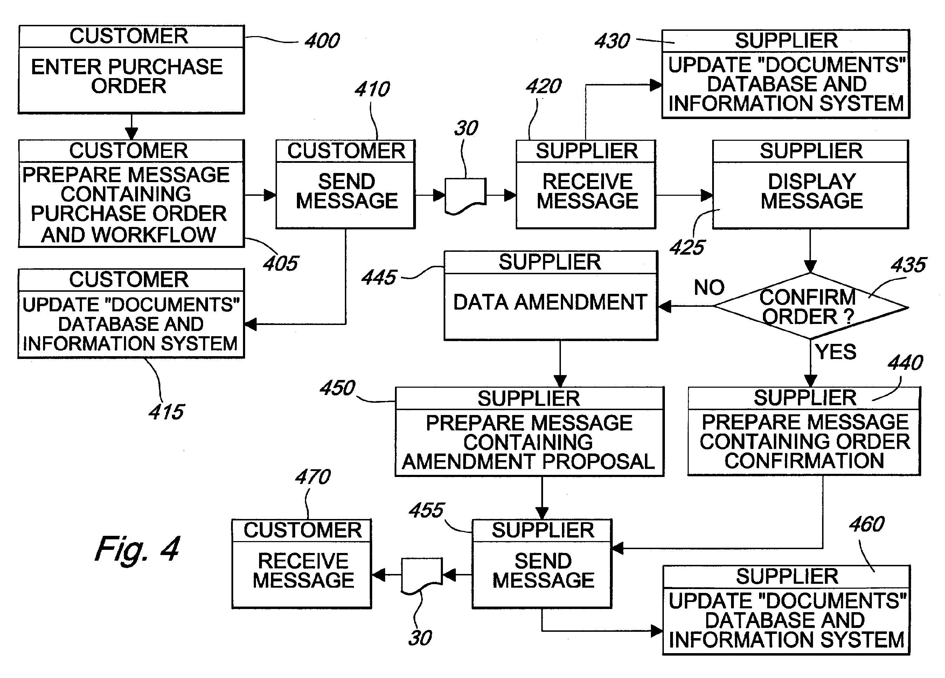

The operation of the system is now described in an exemplifying embodiment thereof, shown schematically in Figure 4, which is useful to better understand the inventive concept on which the present invention is based.

The customer 1 uses the interface of his own information system 10 to generate a new order (step 400) in the manner provided by the information system on which he usually operates. When the order is ready to be sent, the customer 1 can activate the procedure for converting the document 11.

The adapter module 20 receives, via the interface 21, the data 11 related to the new order and passes them to the converter 22, which converts the data from the proprietary format used by the information system 10 to a format in the standard language chosen for the message 30.

At the same time, the converter retrieves from the database 23 the workflow related to the order, which can be different for each order and can be modified by the user by means of the interface 26, and completes the message 30 (step 405). In particular, the workflow defines which operations the supplier can perform in response to the received order. A first possibility consists for example in asking the supplier only to accept or refuse the order. A more advanced possibility is to enable the supplier 2 to amend some parameters of the order, such as the delivery date of each individual product or service ordered, the quantity delivered or to be delivered, the purchase price, and so forth.

An example of workflow 23, visualized graphically, is shown in Figure 7 by means of a status chart. The twelve possible status transitions (901 to 912) are listed in the following Table 1, which clarifies, with reference to the illustrated example, the variation of status and the party (customer 1 or supplier 2) that determined the new status, as well as the action defined within the exchanged message 30 and triggered by the change of status.

**Table 1**

| **Id** | **Initial status** | **Final status** | **Party** | **Action** |
|---|---|---|---|---|
| 901 | New | Proposed | Customer | **notifySupplier:** send *Notification* to *Supplier* (*order proposal*) |
| 902 | Proposed | Proposed | Customer | **notifySupplier** |
| 903 | Proposed | Modified | Supplier | **notifyResponsible:** send *Notify* to a person *Responsible* for the order |
| 904 | Amended | Proposed | Customer | **notifySupplier** |
| 905 | Amended | Confirmed | Customer | **notifySupplier** |
| 906 | Confirmed | FrModif | Supplier | **notifyResponsible** |
| 907 | Confirmed | Finalized | Customer | |
| 908 | Confirmed | Proposed | Customer | **notifySupplier** |
| 909 | Proposed | Confirmed | Supplier | **notifyResponsible** |
| 910 | Proposed | Canceled | Customer | **notifySupplier** |
| 911 | Amended | Canceled | Customer | **notifySupplier** |
| 912 | Confirmed | Canceled | Customer | **notifySupplier** |

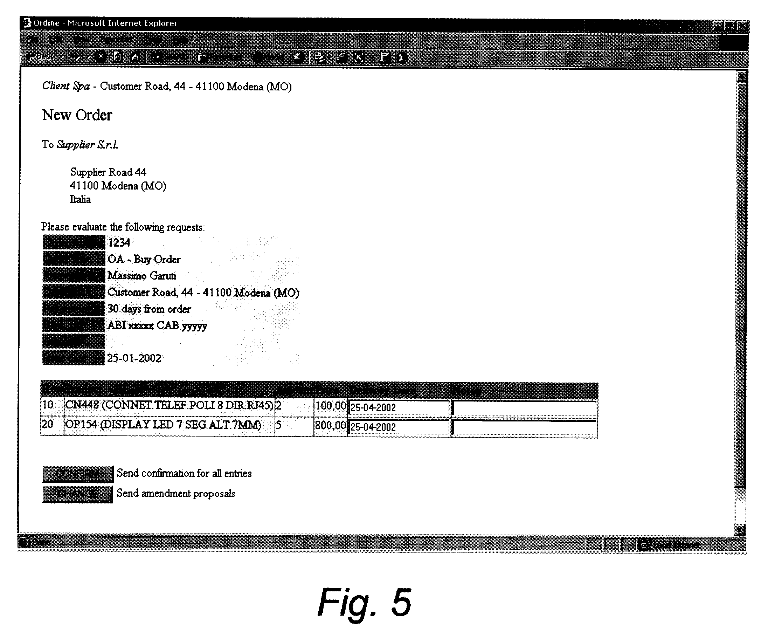

Figure 5 illustrates an example of the possible appearance of a new order generated by the adapter module 20 following the request to send on the part of the customer 1.

In this case, the customer has enabled the possibility to amend the delivery date of the order and the possibility to insert notes next to every ordered product. The HTML code that represents the order is given below in Table 2 by way of example.

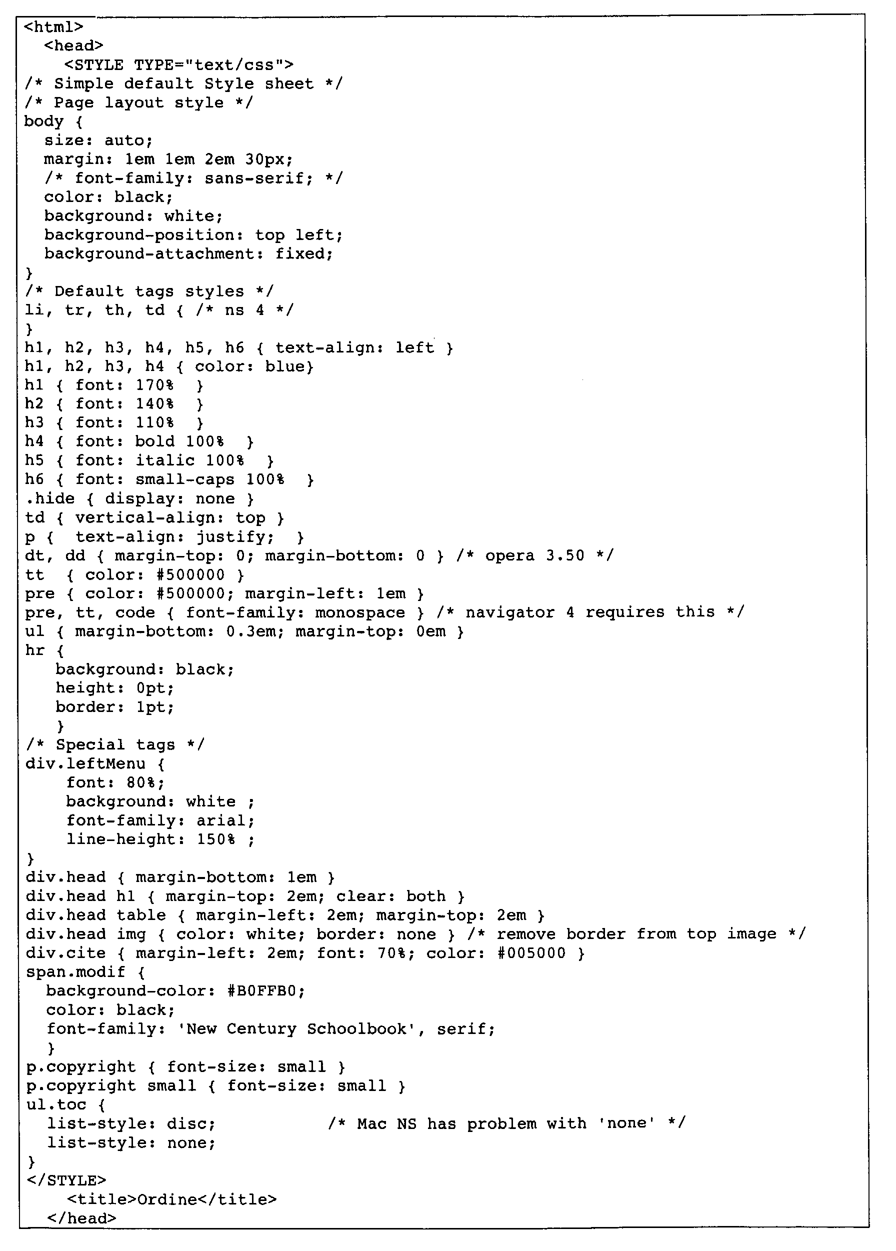

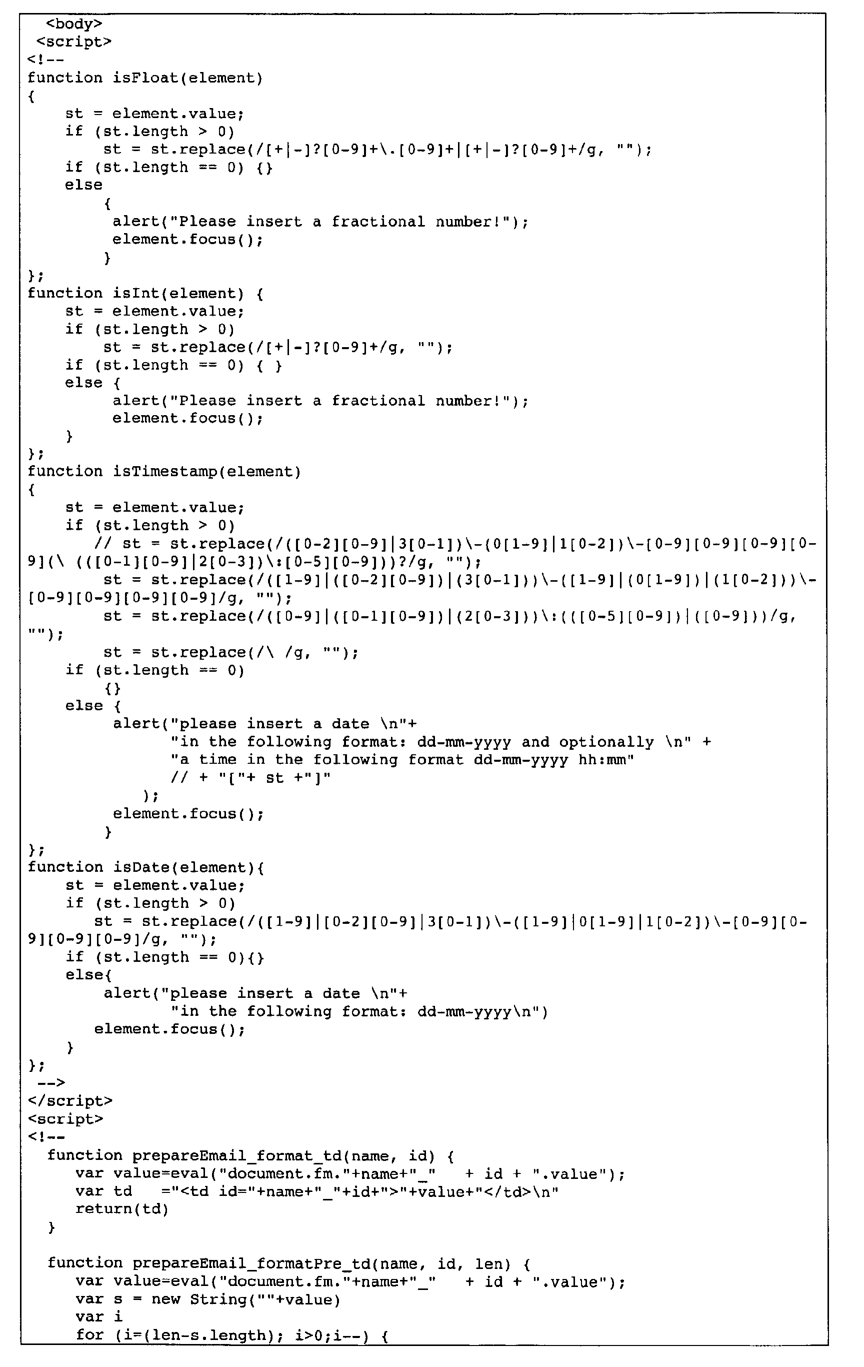

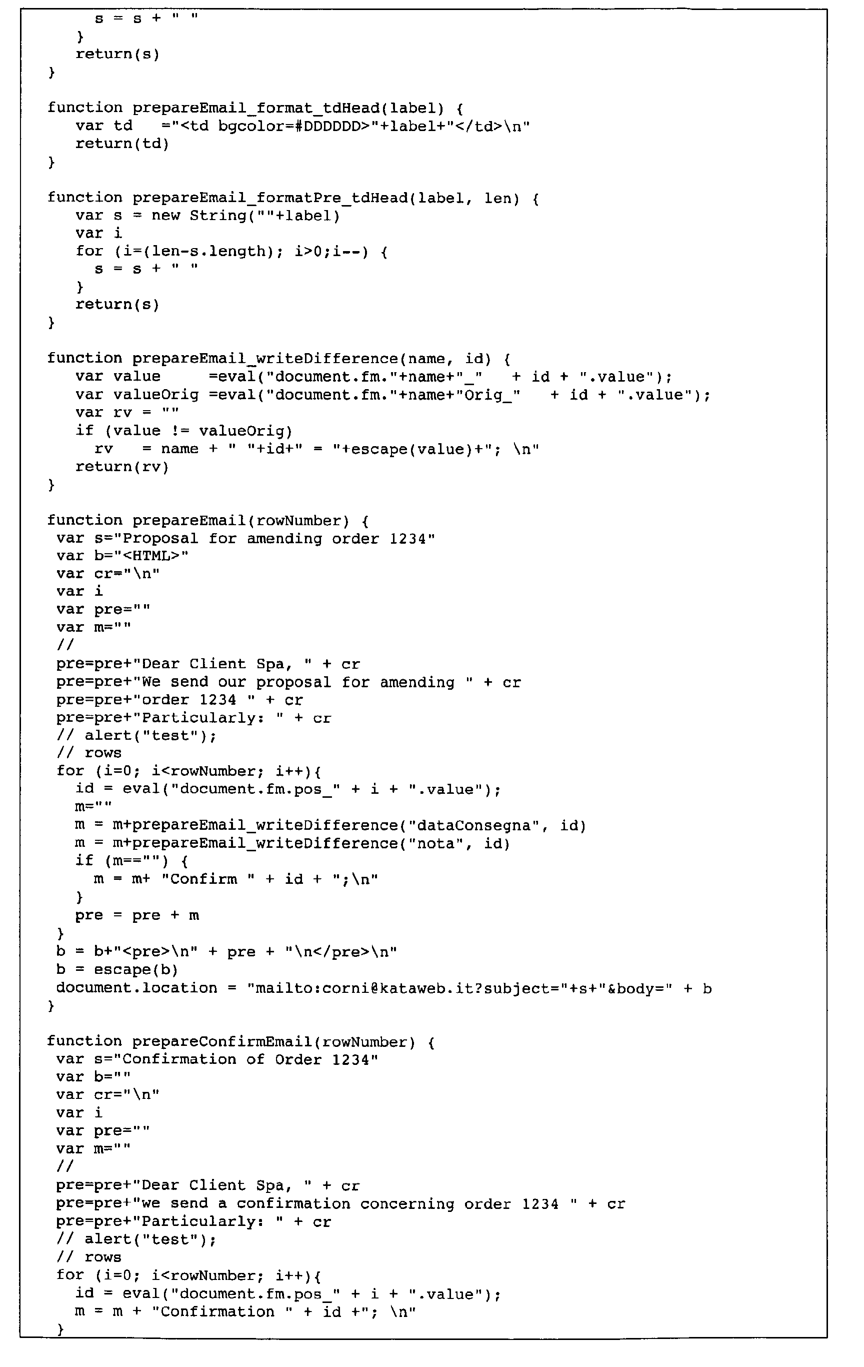

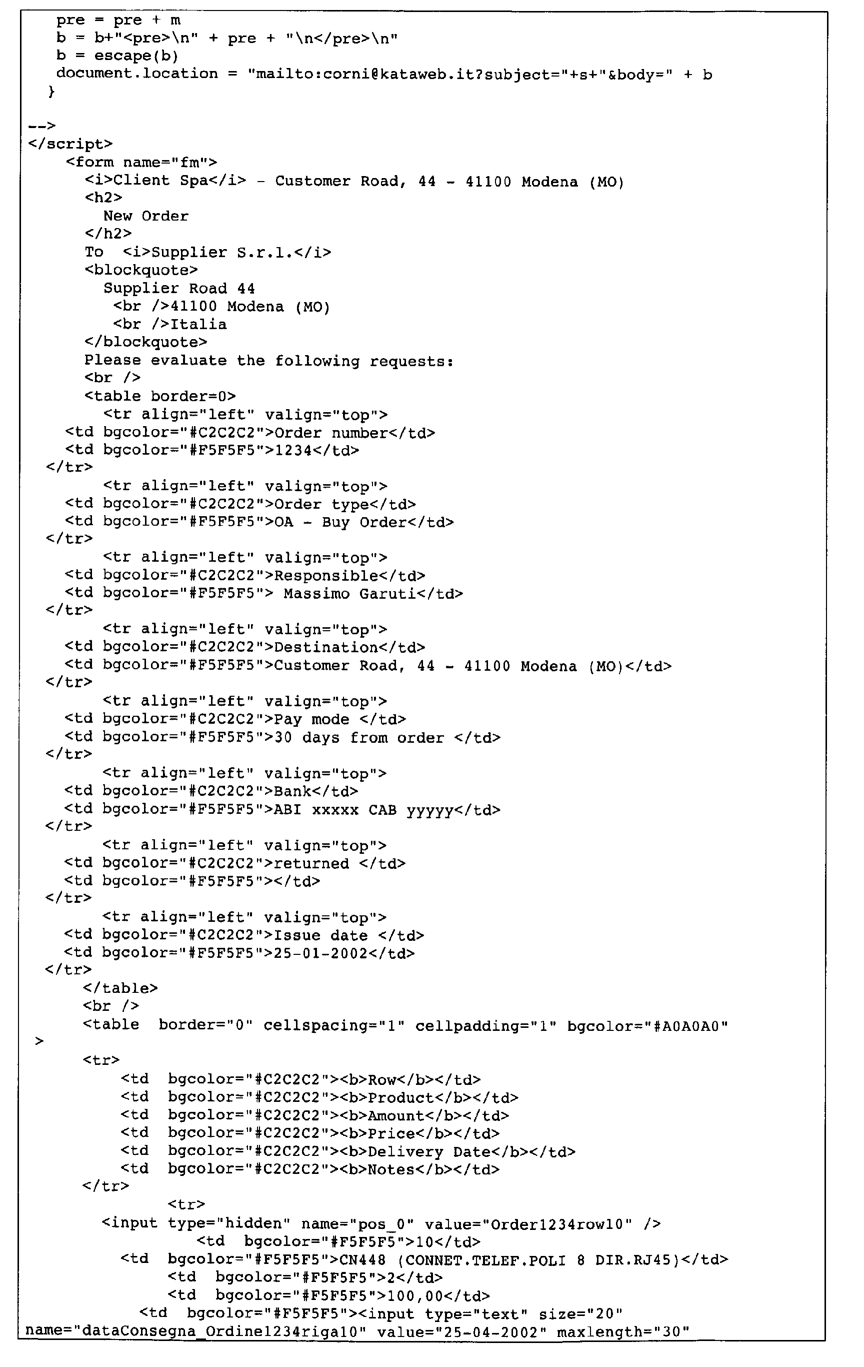

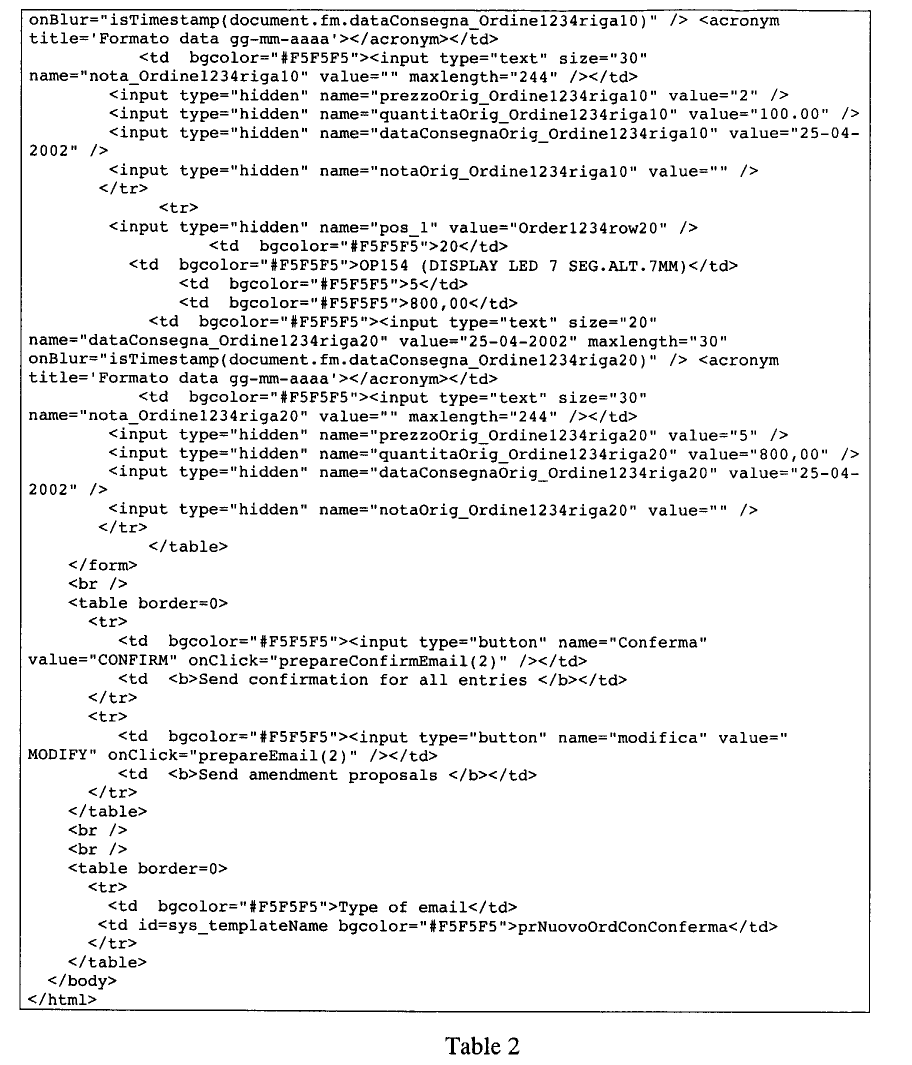

Once the order is physically ready for sending, the customer 1 uses appropriate software means made available in the user interface 26, for example a graphical button, to send the generated message 30 (step 410).

As a consequence of this, the "*Documents*" database 24 is automatically updated by entering the data of the message 30 (step 415).

With reference to Figure 2, when the supplier 2 connects to the data communications network 5, the message 30 is received (step 420) by the receiving module 25' of his adapter 20', displayed on screen (step 425) and entered in the database 24' (step 430).

The supplier 2, after evaluating the contents of the order, can now decide to send a reply to the customer 1, for example to confirm the order or to propose amendments, exclusively as allowed by the message 30 (step 435).

By means of the user interface 26', the supplier confirms the order and prepares the corresponding message (step 440), or the supplier changes the data of the order, for example the delivery date (step 445), by means of the user interface 26' or by acting on the information system 10' via the interface 21', and prepares the message to propose the amendments made (step 450). The send and receive module 25' then sends the message (step 455); this is followed by the automatic updating of the "*Documents*" database 24' (step 460).

At this point the procedure continues on the customer side, where the message is received by the adapter 20 (step 470) until the procedure is completed.

With reference to Figure 1, it should be noted that the supplier does not necessarily require the adapter module 20', since the received message can be displayed in any e-mail program. The same e-mail client used by the supplier 2 is also capable of acting as a tool for entering information related to the life cycle of the orders for the information system 10 of the customer 1, as defined in the HTML or XML portion of the received message 30, and of performing the same steps.

The presence of the adapter module 20', however, also includes an interface for integrating the data received from the customer with the information system of the supplier (and vice versa), and is therefore preferable in this regard. In order to integrate the data of the information system 10' of the supplier in the absence of the adapter module 20', it is necessary to implement an integration between the information system and the documents archived by the e-mail client.

The flowchart related to the operation of the system according to the embodiment of Figure 1 remains substantially unchanged with respect to what is shown in Figure 4, but some functional variations can be observed due to the lack or non-use of an adapter module on the supplier side; these variations are related substantially to the operations for automatic integration between the content of the received message and its input into the company information system.

In particular, once a message 30 has been sent by the customer, the flow proceeds as follows.

When the supplier 2 connects to the data communications network 5, the message 30 is received by the e-mail client, displayed on screen (step 425) and input into the received e-mail archive (step 430).

The supplier 2, after evaluating the content of the order, can now decide to reply to the customer 1, for example confirming the order or proposing amendments, exclusively to the extent allowed by the message 30 (step 435).

By means of the e-mail client, the supplier confirms the order and prepares the corresponding message (step 440), or the supplier amends the data of the order, for example the delivery date (step 445), and prepares the message to propose the amendments made (step 450). By selecting the typical "Send/Receive" function of the e-mail client, the message is then sent (step 455), and then the sent e-mail archive is updated automatically (step 460).

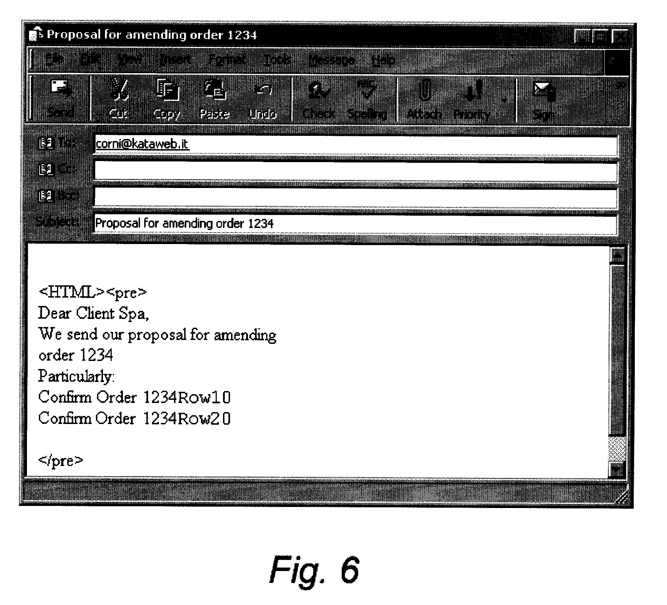

Figure 6 illustrates an example of the appearance of a reply to the order of Figure 5, in which the supplier proposes amendments; the reply is generated automatically by the Microsoft Outlook Express™ e-mail client, which is used as an exemplifying implementation platform because it is widely commercially available.

At this point the procedure continues on the customer side, where the message is received by the adapter 20 (step 470) until the procedure is completed.

It has thus been shown that the present method and system achieve the proposed aim and objects. In particular, it has been shown that the described method and system allow to automate customer-supplier communications, ensuring easy integration with the various management systems of the client and of the supplier, allow the client to define the workflow of the documents with the various suppliers and for the various documents, allow the supplier to manage communication via a standard application that is normally used, such as an e-mail client, in order to manage both the orders that arrive from all clients and to manage the workflow set by the client, without having to use a specific server or a dedicated online service in addition to those normally used, such as an in-house e-mail server or an e-mail server sited at an Internet service provider.

It has been found in fact that the need to provide a predefined intermediary to correctly execute the communication in addition to what is normally provided has been eliminated, with the additional advantage of point-to-point communication without latency of the exchanged documents at one or more repositories external to the parties involved in the communication, except of course for the momentary latency of the messages over the data communications network 5, for example at the e-mail server.

Clearly, numerous modifications are evident and can be executed promptly by the person skilled in the art without abandoning the scope of the protection of the appended claims. For example, it is obvious for the person skilled in the art to replace one communications protocol with another, depending on requirements of the parties involved in the system and on the technology that is commercially available.

It is also evident that the inventive concept on which the present invention is based is independent of the actual implementation of the software modules, which can be written in any language and on any hardware platform, and likewise the manner of integration with the various management systems of customers and suppliers is non-limitative for the purposes of the invention, so long as it allows to import or export information in a proprietary manner or, in this case also, according to a standard, for example ebXML.

Accordingly, the scope of the protection of the claims must not be limited by the illustrations or preferred embodiments illustrated in the description as example, but rather the claims must comprise all the characteristics of patentable novelty that reside in the present invention, including all the characteristics that would be treated as equivalent by the person skilled in the art.

The disclosures in Italian Patent Application No. MO2002A000028 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for exchanging documents related to the life cycle of an order in electronic form over one or more data communications networks, **characterized in that** it comprises the steps of:
-- generating an order in any proprietary electronic format;
-- defining a workflow and rules in a proprietary electronic format;
-- converting said order, said workflow and said rules into a message in a predefined standard electronic format that can be interpreted by one or more standard applications;
-- sending said message from a first station to at least one other station by means of standard communications protocols, said stations being reached by at least one of said data communications networks.

2. The method according to claim 1, **characterized in that** said data communications networks comprise the Internet.

3. The method according to claim 2, **characterized in that** said standard electronic format is the Mime Multipart format, with a portion in HTML language or XML language.

4. The method according to claim 2, **characterized in that** said standard protocols comprise SMTP and POP/IMAP.

5. The method according to claim 1, **characterized in that** said standard applications comprise e-mail clients.

6. The method according to claim 5, further comprising the steps of:
-- upon receiving said message, displaying the received message on screen in a user interface;
-- on command from a user who acts on said user interface, generating an automatic reply message based on the data, the flow and the rules contained in said message, said reply message being in said standard electronic format.

7. A system for the exchange of documents related to the life cycle of an order in electronic form over one or more data communications networks, comprising a proprietary information system for generating and managing orders, **characterized in that** said system comprises:
-- means for defining a workflow and rules in proprietary electronic format;
-- means for converting said order, said workflow and said rules into a message in a predefined standard electronic format that can be interpreted by one or more standard applications;
-- means for sending said message from a first station to at least one other station by means of standard communications protocols, said stations being reached by at least one of said data communications networks.

8. The system according to claim 7, **characterized in that** said data communications networks comprise the Internet.

9. The system according to claim 8, **characterized in that** said standard electronic format is the Mime Multipart format, with a portion in HTML or XML language.

10. The system according to claim 8, **characterized in that** said standard protocols comprise SMTP and POP/IMAP.

11. The system according to claim 7, **characterized in that** said standard applications comprise e-mail clients.

12. The system according to claim 6, further comprising means for:
-- upon receiving said message, displaying the received message on screen in a user interface; and
-- generating an automatic reply message based on the data, the flow and the rules contained in said message, said reply message being in said standard electronic format.
